# EUROPEAN PATENT APPLICATION

(11) **EP 3 355 253 A1**
(43) Date of publication of application: **01.08.2018**
(21) Application number: 17153270.8
(22) Date of filing: 26.01.2017
(51) Int. Cl.: G06Q 10/08, G06F 1/16

(54) **PORTABLE MODULE WITH PRODUCT ELEMENT DETECTOR AND INTEGRAL MAINS PLUG**

(71) Applicant: Straub, Gabriel Á., 12 163 Berlin (DE)
(72) Inventor:
(74) Representative: Dilg, Haeusler, Schindelmann Patentanwaltsgesellschaft mbH

(57) **Abstract**

A portable module (100) which comprises a detector (102) configured for detecting data indicative of an event that a product element (104) is brought in sufficient spatial vicinity of the detector (102), a processor (106) configured for processing the detected data, and a mains plug (108) configured to be pluggable into a power socket (124) for supplying the portable module (100), in particular the processor (106) and the detector (102), with electric energy.

## Description

The invention relates to a portable module, a communication system, a method of managing product elements, a program element, and a computer-readable medium.

Conventionally, hygiene products in a household, for example diapers, have to be stored in order to possess a reservoir of hygiene products, whereby the reservoir has to be refilled on a continuous basis. This is mandatory for the case that hygiene products are needed and/or unexpectedly a high number of these products is needed instantaneously. Consequently, there has to be a permanent control of the reservoir of hygiene products in order to avoid a sudden depletion of the reservoir, which may lead to unpleasant consequences. In any case, the need to permanently keep the overview over a remaining reservoir of hygiene products is cumbersome for a user. However, such a conventional management of a product inventory is cumbersome and lacks safety.

In this respect, it is one possibility to count and keep in mind each hygiene product, which has been used. Alternatively, the hygiene products within the reservoir have to be monitored manually on a continuous basis. Even in the case that this works fine, the provision of unused hygiene products is still a demanding task. It requires time to visit a shop, which shop is generally only open during working hours, when members of the household may also be at their respective workplaces themselves. For example in the case of diapers, these are frequently needed in the evening hours, when most shops are already closed. But even in the case that shops are still open during evening hours, the question concerning which member of the household will do the shopping of unused hygiene products may cause conflicts. In the case that only one adult person resides in the household during evening hours, this task may even be unfulfillable.

Therefore, such a conventional management of hygiene products and other product elements is very cumbersome and requires a lot of organization and time.

It is an object of the invention to provide a user convenient, flexible and efficient way of managing product elements of a user.

In order to achieve the object defined above, a portable module, a communication system, a method of managing product elements, a program element, and a computer-readable medium according to the independent claims are provided.

According to an exemplary embodiment of the invention, a portable module is provided which comprises a detector configured for detecting data indicative of an event that a product element is brought in sufficient spatial vicinity of the detector, a processor configured for processing (in particular preprocessing, fully processing and/or post-processing) the detected data, and a mains plug configured to be pluggable into a power socket for supplying the portable module (in particular the processor and the detector) with electric energy.

According to another exemplary embodiment of the invention, a communication system is provided which comprises a portable module having the above-mentioned features, and at least one communication partner device communicatively coupled with the portable module for communicating at least one of the detected data and information derived therefrom (in particular as a result of the processing by the processor of the portable module and/or as a result of a processing by at least one of the at least one communication partner device).

According to still another exemplary embodiment of the invention, a method of managing product elements is provided, wherein the method comprises detecting data indicative of an event that a product element is brought in sufficient spatial vicinity of a detector of a portable module, processing the detected data by a processor of the portable module, and plugging a mains plug of the portable module into a power socket for supplying the portable module (in particular the processor and/or the detector) with electric energy.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, a floppy disk or a hard disk) is provided, in which a computer program is stored which, when being executed by a processor (such as a microprocessor or a CPU), is adapted to control or carry out a method having the above mentioned features.

Data processing which may be performed according to embodiments of the invention can be realized by a computer program, that is by software, or by using one or more special electronic optimization circuits, that is in hardware, or in hybrid form, that is by means of software components and hardware components.

In the context of the present application, the term "product element" may particularly denote an item, which may be acquirable in a shop, a part thereof and/or at least part of a package thereof. Hereby, the term "product element" denotes all parts that belong to the product. For example, a product may comprise a manufactured article and/or the package of this article. For instance, a diaper and the packaging of the diaper may be denoted as product elements, respectively. In another example, the term "product element" may denote toilet tissues and the paper role, onto which the toilet tissues are rolled, as well as the package of the toilet tissues rolled on the paper role. A product element may be a product before use, after use, or at least part of a package thereof.

In the context of the present application, the term "when one entity is in sufficient spatial vicinity of another entity" (wherein one of the entities may be a product element and the other entity may be a detector) may particularly denote that a detection is only enabled or executed when a distance between the entities (or more precisely between detection portions thereof) is below a predetermined threshold value. In embodiments, the predetermined threshold value may be between 0 (i.e. direct contact between the entities) and 10 cm, in particular in terms of Near Field Communication (NFC). What concerns Radio Frequency Identification (RFID), sufficient spatial vicinity for triggering detection may be up to 100 cm. In terms of electromagnetic detection, (in particular wireless) data communication interfaces of the entities may be configured so that (in particular wireless) data communication via the data communication interfaces of the entities is triggered by (or is not enabled before) the event of the two entities approaching one another up to or even below such a small mutual distance that the exchange of data between these two entities becomes possible in terms of a corresponding communication protocol (such as an NFC protocol).

In the context of the present application, the term "mains plug" may particularly denote a mains plug to be plugged into a corresponding power socket. Such a mains plug may be configured in accordance with an industrial standard in accordance with a jurisdiction where the corresponding portable module is used, for instance according to one of IEC/TR/60083, EN 50075, NEMA 5-15, NEMA 1-15, etc. (in particular in the respectively latest published version at the priority date of the present patent application).

According to an exemplary embodiment of the invention, a portable module (i.e. a module which can be easily carried by a user to any desired place of use or from one place of use to another place of use) is provided which can be operated by a user by simply plugging the mains plug of the portable device into a power socket of a grid or power supply system. By taking this measure, power supply of a detector, a processor and/or other electronic components of the power module may be initiated. At the same time and with the same user action, this plugging operation may bring the portable module into a proper position and orientation to enable a user to subsequently bring a product element in spatial vicinity to the detector so that detection of information indicative of the identity of the product element can be triggered. The detection of this information may also result in a processing of the acquired data by a processor of the portable module. When the portable device is implemented in the framework of a communication system according to an exemplary embodiment of the invention, the raw data, pre-processed data or fully processed data in accordance with the made detection can be forwarded to a communication partner device via a communication network. By taking this measure, the data may be transmitted to a desired destination within the communication network. With such an architecture, a user convenient system of managing product elements by a user is provided. All the user has to do is plugging the portable module into the power socket and approaching the product element towards the detector of the portable module. All other tasks in terms of management of a product element portfolio may then be done automatically by a communicatively coupled communication partner device which can be located anywhere (for instance close to or remote from the user and the portable modules). By triggering a detection of a product element only when a sufficient spatial vicinity of the product element with regard to the detector is enabled, an intuitive mechanism is provided suppressing the risk of false detection of a product element which is only accidentally in the environment of the portable module. For instance, in terms of Near Field Communication (NFC) as a possible detection architecture, the detection may be only triggered when the distance between detector and product element is less than 5 cm or less than 10 cm. Even users without specific skills are intuitively able to operate such a portable module. The described portable module and corresponding communication system may be installed for instance in a household to enable a user to keep an overview over goods used within this household and/or to trigger an order to deliver one or more product elements of the detected type when the user has indicated, by triggering a detection, that the respective product element should be delivered to the user. Contrary to conventional approaches, the management of product elements is therefore rendered failure robust, quick, user convenient and can be implemented with low requirements concerning resources in terms of hardware and software.

In the following, further exemplary embodiments of the portable module, the communication system, the method, the computer-readable medium and the program element will be described.

In an embodiment, the detector comprises at least one of the group consisting of a Near Field Communication (NFC) detector, a Radio Frequency Identification Tag (RFID) reader, a barcode scanner, a Quick Response (QR) code scanner, and an alphanumerical code scanner. In terms of NFC or RFID or any other implementable transponder, the product element may be equipped with a corresponding tag which can be detected automatically by an NFC reader or RFID reader implemented in the portable module. Since such readers may have a certain maximum distance with regard to a tag required to initiate detection, the intuitive initiation of a detection when a product element is brought in sufficient spatial vicinity to the detector can be fulfilled. However, also optical scanning such as barcode scanning, QR code scanning, alphanumerical code scanning, etc. is a powerful tool for detecting the presence of a product element in sufficient spatial vicinity of the detector in a reliable and user determinable way. It should be mentioned that other detection mechanisms are possible, for instance a detection initiated by a mechanical contact between the product and the portable module.

In an embodiment, the portable module is composed of (in particular exactly) two components, i.e. a user equipment component and a holder component. The user equipment may be an electronic device such as a smartphone, a PDA, a tablet or the like which may already have implemented the required hardware in terms of detector and processor. The second component of such a two-piece portable module may be holder component which may include the mains plug so as to simultaneously fulfil the tasks of power supply and holding the user equipment. Preferably, the holder component may be configured so that, when the user equipment is held by it in a predefined way, it is already brought to an orientation with regard to a user (when the mains plug is plugged into a power socket) that no further installation task needs to be fulfilled by the user for starting operation of the portable module. This configuration makes it very simple and failure-robust for a user to use the power module. With a two-piece configuration of the portable module, it is very simple even for users without specific skills to bring the portable module into a condition ready for use. No complex handling of many separate pieces is required. However, it should be said that, alternatively, the power module may also be embodied as a single integral module or an arrangement of more than two components.

In an embodiment, the user equipment component includes the detector and the processor. In a configuration in which the detector and the processor form part of the user equipment, it is possible to configure easily available electronic devices for configuring the user equipment, such as a smartphone which only requires to be programmed in accordance with the task of product element management.

In an embodiment, the holder component is configured for detachably holding the user equipment. For instance, the user equipment may be fixed at the holder component by a clamping mechanism. Such a clamping mechanism can be intuitively operated by a user. A form closure between holder component and user equipment may be provided upon successful installation of user equipment on holder component. However, it is additionally or alternatively possible to implement other fixing mechanisms, such as a magnetic fixing mechanism, a screwing connection, a bayonet connection, a snap-fit connection, etc. for connecting holder component and user equipment. By enabling a user to detach the user equipment from the holder component, a user is enabled to carry out another operation mode of the portable module in which the user does not approach the product element to the portable module installed in a power socket, but in contrast to this the user may approach the user equipment towards the product element. This increases the degree of freedom for a user of operating the portable module either in the one or the other operation mode.

In an embodiment, the holder component is entirely rigid so as to define a fixed position and orientation of the user equipment when the user equipment is held and accommodated in an accommodation volume defined at least partly by the holder component and when the mains plug is plugged into a power socket. Taking this measure significantly simplifies operation of the portable module, since any adaptation of the portable module is dispensable. Correct orientation of the user equipment in accordance with the anatomy of a human user is automatically ensured by the mentioned structural configuration of the holder component.

In an embodiment, the holder component includes the mains plug. When the holder component is equipped with the mains plug, it may simultaneously fulfil both tasks of providing a power supply to the user equipment and at the same time hold the latter. In particular, when the holder component is equipped as a single rigid body, it can be dimensioned and shaped so that, when it accommodates the user equipment in a predefined way, the user equipment is already in an orientation that a user can immediately start operation of the portable module. For instance, the holder component may be shaped in such a way that, when the mains plug is plugged into the power socket, the detector is oriented towards the user so that the user only needs to approach a product element to initiate detection. It is also possible that the user equipment comprises a display, preferably a touch screen, which is automatically brought into a slanted configuration with regard to a user enabling a user to directly see the display when the power module is installed in a predefined way. Complex installation of the portable module is thereby dispensable.

In order to obtain a compact configuration and to support rigidity of the hold component, the mains plug at the holder component may be provided without cable.

In an embodiment, the user equipment comprises a first electrically conductive contact (which may be coupled with the processor, the detector and/or a rechargeable battery of the user equipment) and the holder component comprises a second electrically conductive contact coupled with the mains plug and being electrically coupled with the first electrically conductive contact upon attaching the user equipment to the holder component. According to such an embodiment, a mechanism is provided which automatically establishes an electric connection between user equipment and holder component upon establishing a predefined mechanical connection there between. For instance, when the user equipment is clamped into an accommodation volume of the holder component, the mentioned electrically conductive contacts may be simultaneously brought in physical contact with one another. Thereby, an electrical connection from the power socket up to the processor, the detector, an accumulator, etc. of the user equipment can be established by a mere installation of the user equipment on or in the holder component.

In an embodiment, the user equipment comprises a first inductor (which may be coupled with the processor, the detector and/or a rechargeable battery of the user equipment) and the holder component comprises a second inductor coupled with the mains plug and being wirelessly coupled for electromagnetic interaction with the first inductor upon attaching the user equipment to the holder component. According to the described alternative embodiment, supply or transfer of electric power from the mains supply and the holder component towards the user equipment may be established by an inductive coupling. Thus, the generation of an electrical contact between two electrically conductive surfaces of holder component and user equipment may be dispensable in such an embodiment. Therefore, such an embodiment is robust against any contamination of an electrically conductive surface by dust or dirt which might deteriorate a low-ohmic electric connection. With the inductive coupling (alternatively capacitive coupling), a contactless energy supply is possible. Since such an inductive coupling is possible over a certain distance, also the conditions concerning adaptation between user equipment and holder component can be relaxed.

In an embodiment, the holder component and the user equipment are configured so that a normal vector of a surface of a display (for instance a touchscreen) of the user equipment is slanted with regard to a plugging direction along which the mains plug is to be plugged into a power socket. When the display orientation of the user equipment is slanted with regard to a plugging direction of the mains plug into the power socket, establishing the electric installation of the power module automatically brings the portable module into an orientation in which the display is properly visible for a user. This results in a user-friendly configuration. In such a configuration, the holder device may be an entirely rigid component thereby defining a fixed orientation with regard to a properly attached user equipment.

In an embodiment, the holder component comprises a support surface for supporting a back main surface of the user equipment and at least one engaging protrusion for engaging, in particular clamping, at least one edge portion of the user equipment. In particular, the at least one engaging protrusion may be configured for engaging at least one of the group consisting of at least one side edge and at least one corner edge of the user equipment. By such a configuration, a detachable connection between user equipment and holder component is made possible without limiting the freedom for a user of watching a display or using a touchscreen in the assembled state of the portable module. A flat back surface of the user equipment may safely rest on the support surface of the holder component, while the one or more protrusions (for instance clamping fingers) may engage only edge portions of the user equipment without covering the display. When establishing a clamping connection only at one or more edges and/or one or more corners of the user equipment, simple handling is combined with a reliable connection.

In an embodiment, the user equipment is configured as a mobile phone, in particular as a smart phone. For instance, it is possible to convert a smartphone into a user equipment of the portable module according to an exemplary embodiment of the invention by installing a corresponding software thereon (for instance an app). Thereby, the mobile phone may be synergistically used for product element management. By rendering it dispensable to provide a separate user equipment for the product element management, an environmental friendly portable module may be provided with small additional hardware requirements.

In an embodiment, the processor is configured for processing the detected data for deriving identification information indicative of an identity of the product element which has been brought in sufficient spatial vicinity of the detector. In an embodiment, the processor is configured for triggering an order of a product element in response to a derivation of the identity of the product element which has been brought in sufficient spatial vicinity of the detector. By taking one or both of these measures, the processor may identify which type or kind of product element (for instance which kind of diaper) has been brought in spatial vicinity of the detector of the portable module. Such an identification information may be encoded in a barcode, a QR code, an alphanumerical code, etc. of or on the product element. Also, an RFID tag or an NFC tag attached to or forming part of the product element may include this information. Thereby, the processor may identify during the detection or reading operation which product element has been brought to the detector by the user. In such an embodiment, the portable module may also be optionally used for automatically ordering a product element which has been stocked by a user, but no or not a sufficient number of this kind of product elements is left at the user side so that the user requires new product elements of this kind. By taking this measure, the action of bringing a product element (for instance a product package) in sufficient spatial vicinity of the detector can be taken as a trigger for automatically ordering a new delivery of this kind of product elements to the user. Thereby, it becomes dispensable for a user to shop the product in a store or order the product element manually via the Internet. Only the establishment of a spatially close location between the product element and the detector is sufficient to initiate the order. When a corresponding identity of the product element to be ordered has been determined by the detector and the processor, this information may also be forwarded to a communication partner device via a communication network such as the Internet, and the order may be carried out.

However, the portable module may also be operated in a configuration mode in which a set of product elements to be managed by the portable module is defined by a user, for instance in an installation phase. In such a configuration mode, all product elements brought in spatial vicinity of the detector of a user may be added to a virtual portfolio which shall be later managed by the communication system. Storage or the portfolio data may be performed at the portable module or at the communication partner device. For each of these registered product elements, the user may define via the user equipment conditions according to which an order shall be placed in the future. For instance, the user may define as to whether an order shall be automatically placed upon bringing the product element in spatial vicinity of the detector in the future, or whether a user confirmation is required for this (for instance via a user interface of the user equipment). It is also possible that the user defines a quantity of product elements to be ordered in a future event of bringing a product element of such kind in spatial vicinity of the detector. Both configuration mode and order mode may be carried out with the same hardware in an efficient way.

In an embodiment, the portable module comprises a communication unit, in particular a wireless communication unit, configured for communicating, in particular for wirelessly communicating, at least one of the detected data and information derived therefrom as a result of the processing to the at least one communication partner device. For example, when installed in a house, the portable module may communicate wirelessly with a router via a Wi-Fi connection. Thereby, it is sufficient to simply plug the portable module into the power socket, initiate wireless communication between router and portable module and start operation thereof. The router may, in turn, be communicatively coupled via the public Internet to a further communication partner device such as a server processing the supplied data and managing delivering product elements to the household where the portable module is installed. When the portable module is equipped with a battery, it can be run (at least temporarily) even when the portable module is not plugged into the power socket or the user equipment is detached from the holder component. This increases the flexibility for a user when using the portable module.

In an embodiment, the portable module comprises at least one battery, in particular rechargeable via the mains plug, for supplying the processor with electric energy. When equipped with an accumulator, the accumulator may be recharged by electric power provided by the mains supply and supplied from the power socket via the mains plug to the accumulator.

In an embodiment, the portable module comprises a user interface configured for at least one of the group consisting of displaying at least one of the detected data and information derived therefrom as a result of the processing, and receiving a control command from a user related to a management of an inventory of product elements. For example, such a user interface may be a touchscreen of the user equipment.

In an embodiment, the portable module comprises a voice recognition unit configured for recognizing a user's voice, wherein the processor is configured for processing a recognized voice signal in terms of managing a stock or an inventory of a detected product element (in particular of managing an order of a detected product element). The voice recognition unit may be a microphone of the user equipment. The detected voice can be analyzed in order to derive a content thereof. At least one user command can be extracted from the voice signal. This user command can be processed by the processor of the portable module and/or can be transmitted via the communication network to a communication partner device for processing. Based on this command, it is possible that a detected product is ordered, a stock, consumption or requirement of a corresponding product element may be displayed or output to the user via a user interface of the portable module, or a statistical data output related to the product element can be initiated. By taking this measure, a combination of stock evaluation, automatic ordering, and/or acoustic output of a product element specific need and/or consumption can be carried out by the portable module.

In an embodiment, the at least one communication partner device is configured for managing an inventory of product elements assigned to a user of the portable module based on the communicated data and/or information. By taking this measure, the software installed on the portable module may be of simple type, and the hardware requirements thereof are relaxed. In particular, multiple dummy electric devices may be used as portable modules within a household or other environment. Only the communication partner device, which may be capable of managing multiple portable modules assigned to a user and/or assigned to different users, may be equipped with more sophisticated resources for managing the portable modules from a central position. This keeps the entire amount of resources of the communication system small.

In an embodiment, the at least one communication partner device is configured for triggering an order of a product element in response to the receipt of a derived identity of the product element which has been brought in sufficient spatial vicinity of the detector. Therefore, the mere establishment of a sufficiently spatially narrow mutual arrangement between portable module and product element may trigger the order of the product. Management of an inventory of product elements is thereby rendered very simple for a user.

In an embodiment, the at least one communication partner device is configured for communicating inventory data related to a management of an inventory of detected product elements to the portable module to be displayed to a user on a display of the portable module. In such an embodiment, the communication partner device may process the data concerning the detected product elements, may draw conclusions concerning the product element inventory management, and may send back corresponding display data to be displaced locally for a user on the portable module. By taking this measure, the majority (for instance all processing tasks following identification of the detected product element) of processing tasks may be carried out centrally by the communication partner device, and the result of the processing is then sent back to the portable module for local display. This again relaxes the requirements concerning software and hardware resources at the side of the portable module(s).

In an embodiment, the at least one communication partner device comprises at least one of the group consisting of a router, and a server computer. In particular, a communication flow may be from a portable module via a router in the household, the public Internet up to a central server managing the inventory of product elements of multiple users. A further communication flow may be backwards from the central server, via the Internet, the router up to the portable module. The installation efforts for a user are therefore very low, because the user only requires to plug the one or more portable modules into power sockets of a house or the like and may establish a communicative coupling between the one or more portable modules and the public Internet via the router. After an initial registration of the user or the product module(s) at the server computer or another competent node or communication partner device of the communication system, actual operation of the product modules may be started.

In an embodiment, the communication system comprises at least one further portable module having the above-mentioned features to which the at least one communication partner device is communicatively coupled. Hence, multiple portable modules of the same or different users may be communicatively coupled and served by the same communication partner device. For example, a user may install portable modules in a kitchen (for instance close to a refrigerator), in a bathroom, at a diaper changing table, in a garage, at a storage container such as a waste bin, etc. At each position of a household at which product elements are consumed by a user, the provision of a portable module can simplify the process of ordering a new set of product elements when product elements of a stock have been used.

The communication network may be freely extended or scaled down by the addition or the removal of individual portable modules to the communication system without effecting operation of the other portable modules of such a communication system.

In an embodiment, the communication system comprises one or more power sockets in which the mains plug of the portable module(s) is or are plugged or is or are to be plugged. The power socket(s) may form part of one and the same house.

In an embodiment, the portable module and the product element may be configured to initiate data communication by a user carrying a product element to the portable module and thereby reducing a distance between the portable module and the product element to fall below about 10 cm, more particularly to fall below about 5 cm. These maximum distance values are in accordance with NFC technology. Even more particularly, the initiation of the data exchange may be triggered by the user by touching the portable module and the product element in a specific embodiment.

In an embodiment, wireless data communications interfaces of portable module and/or product element(s) may be configured for wirelessly communicating the data by one of the group consisting of Near Field Communication, and Radio Frequency Identification. In the context of this application, the term "Near field communication" (NFC) may particularly denote a set of standards for electronic devices to establish radio communication with each other by touching them together or bringing them into proximity, usually no more than a few inches. Communication is also possible between an NFC device and an unpowered NFC chip, called a "tag". NFC allows a two-way communication between endpoints, whereas systems according to other embodiments such as contactless smart cards are one-way only.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Figure 1 illustrates a communication system composed of multiple portable modules installed at different power sockets of a house and being communicatively coupled with communication partner devices within a communication network according to an exemplary embodiment of the invention.
Figure 2 illustrates a schematic view of a portable module according to an exemplary embodiment of the invention.
Figure 3 illustrates a side view of a portable module according to an exemplary embodiment of the invention composed of a user equipment and a holder component and plugged into a power socket in a vertical wall of a building.
Figure 4 illustrates a rear view of a holder component of a portable module according to an exemplary embodiment of the invention.
Figure 5 illustrates a front view of the holder component of the portable module according to Figure 3.
Figure 6 illustrates a three-dimensional view of a portable module according to an exemplary embodiment of the invention in which a user equipment is mounted on the holder component according to Figure 3.

The illustrations in the drawings are schematical. In different drawings, similar or identical elements are provided with the same reference signs.

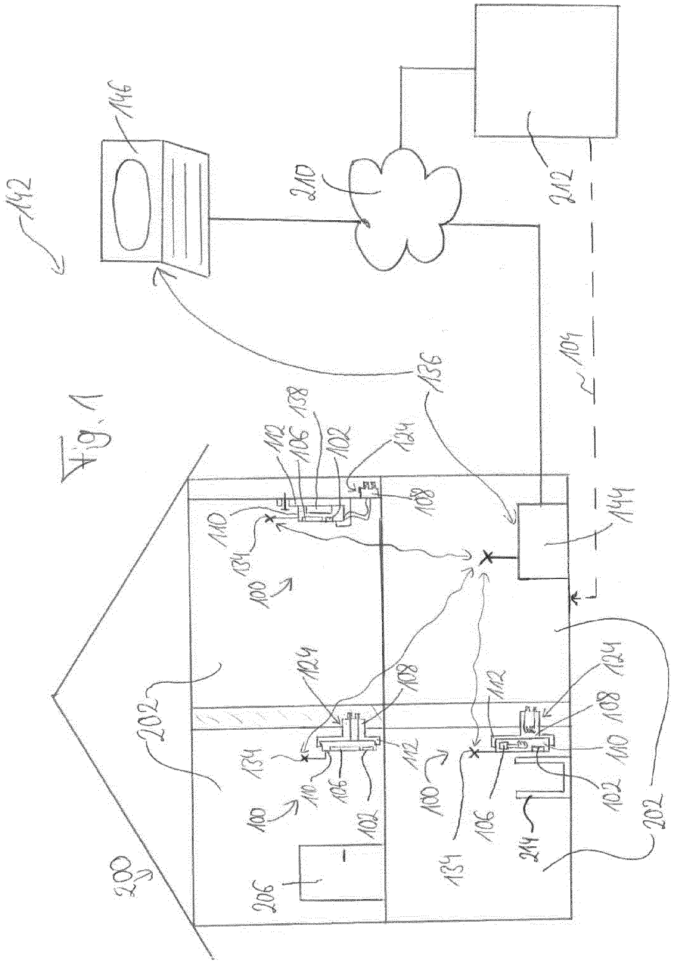

**Figure 1** illustrates a communication system 142 composed of multiple portable modules 100 inserted in different power sockets 124 of a house 200 and being communicatively coupled with communication partner devices 136 over a communication network according to an exemplary embodiment of the invention.

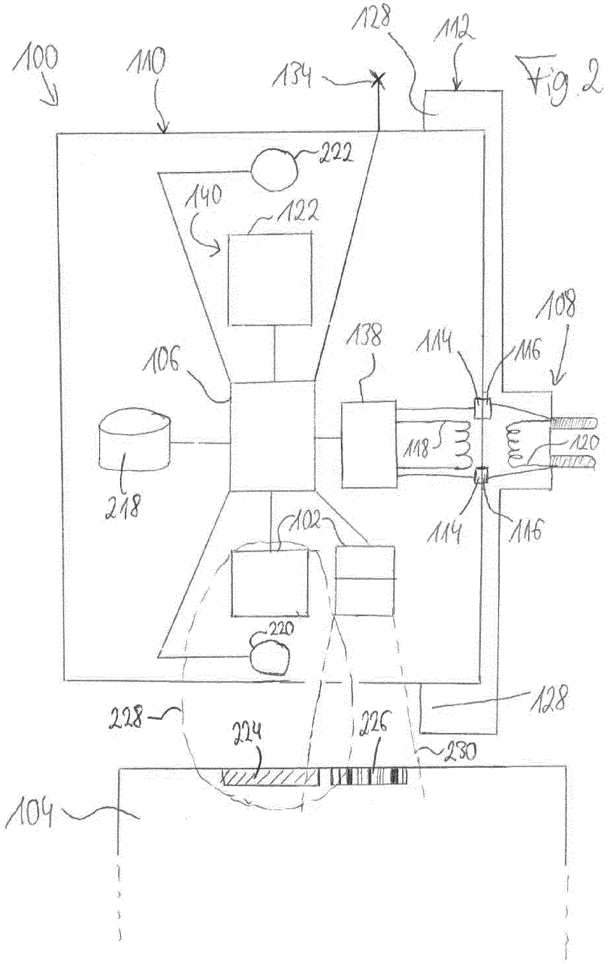

A server computer 146 as one of the communication partner devices 136 is configured for managing an inventory of product elements 104 (see Figure 2) assigned to a user of the portable modules 100 based on data communicated between the portable modules 100 and the server computer 146. The server computer 146 may also be configured for triggering an order of a product element 104 in response to deriving the identity of product elements 104 which a user has brought in sufficient spatial vicinity of a respective detector 102 of a respective portable module 100. The server computer 146 is also configured for communicating inventory data related to a management of a user-related product inventory of product elements 104 to the portable module 100 for display to a user.

As a further communication partner device 136, a router 144 is provided which is installed in the house 200 and provides a Wi-Fi connection with the portable modules 100. Since the router 144 is communicatively coupled to the server computer 146 via communication network 210 (for instance the public Internet or a mobile communication network), communication between all of these nodes is possible.

A number of power sockets 124 are provided at different positions within the house 200. In each of the power sockets 124, a respective mains plug 108 of a respective one of the portable modules 100 is plugged. In other words, the respective mains plug 108 of a respective portable module 100 is configured to be pluggable into any of the power sockets 124 for supplying electronic components of the portable modules 100, for instance a processor 106 and a detector 102 as well as a display, with electric energy. Thereby, a supply of the respective portable module 100 with electric power from a mains supply or power grid can be established.

Each of the portable modules 100 may be composed of a user equipment 110 and a holder component 112 detachably holding the user equipment 110 and being plugged into a power socket 124.

Each of the portable modules 100 comprises the mentioned respective detector 102 configured for detecting data indicative of an event that a product element 104 is brought in sufficient spatial vicinity of the detector 102. In other words, when the product element 104 is spatially approached by a user to the detector 102 of a respective portable module 100 and is thereby brought in a spatial detection range of the detector 102, this event can be detected by the detector 102 and the respective product element 104 can be identified. This identification of a product element 104 approached within a spatial detection range of the detector 102 can occur by data processing of the processor 106 of the portable module 100 or by the server computer 146 or another communication partner device 136. For instance, the detector 102 of a respective portable module 100 can be a Near Field Communication (NFC) detector or a Radio Frequency Identification (RFID) detector detecting a corresponding tag attached to or forming part of a respective product element 104. In the event of such a detection, the detector 102 may forward detected data to the mentioned respective processor 106 of the corresponding portable module 100. Such a processor 106, for instance a microprocessor or a central processing unit (CPU) may be configured for processing (for instance only preprocessing or fully processing) the detected data. For instance, the identity of the product element 104 may be determined by the processor 106 or by the respective communication partner device 136 by extracting this information from the detection data detected by the NFC or RFID detector 102.

However, it is possible that a respective one of the portable modules 100 comprises more than one detector 102. It is also possible that different ones of the portable modules 100 are equipped with different kinds of detectors 102. Such different detectors 102 of a respective portable module 100 or of different portable modules 100 can be for example an NFC detector, an RFID reader, a one-dimensional barcode scanner, a Quick Response (QR) code scanner (i.e. a two-dimensional barcode scanner), and an alphanumerical code scanner (i.e. a scanner scanning a sequence of letters and/or numbers in which a product identity may be encoded). The only requirement is that the detectors 102 implemented in the portable modules 100 are of the type that they are incapable of (or at least inactive in terms of) detecting a product element 104 when it is spaced from the detector 102 by more than a predetermined threshold distance (which may be in a range between 0 cm, i.e. direct physical contact between product element 104 and the portable module 100, and 10 cm) and that are capable of detecting the product element 104 when its distance to the detector 102 falls below the predetermined threshold value (for instance when a direct physical contact between portable module 100 and product element 104 occurs or when the product element 104 enters a spatial detection range of a respective detector 102). By taking this measure, an intuitive system is provided to a user of the portable modules 100 allowing to clearly initiate a detection event without the risk of false detection of product elements 104 which are placed accidentally in the wider environment of the respective portable module 100. In one embodiment, it may even be possible for a user to adjust the predetermined threshold distance by making a corresponding selection at the respective portable module 100.

As will be described below in further detail referring to Figure 2 to Figure 6, each of the portable modules 100 may be composed of a user equipment 110 component and a holder component 112. The user equipment 110 may include the detector 102 and the processor 106. Furthermore, the user equipment 110 may comprise a rechargeable battery 138 (see Figure 2) being rechargeable via the mains plug 108 for supplying the processor 106 with electric energy. The holder component 112 may include the mains plug 108 and may include a holding provision for holding the user equipment 110 in place. The holder component 112 is configured for detachably holding the user equipment 110. As a consequence, a user is enabled to selectively connect the user equipment 110 to the holder component 112 (for instance for permanent installation or for charging purposes) or to detach the user equipment 110 from the holder component 112 (for instance to use the user equipment 110 at a position apart from the mains supply 124 or for approaching the user equipment 110 towards a product element 104 for triggering a detection event rather than approaching the product element 104 to the user equipment 110).

In the event of a relative motion between detector 102 and a product element 104 for bringing the product element 104 into the spatial detection range of the detector 102, the detector 102 will detect this event and the processor 106 will process the detected data for deriving identification information indicative of an identity of the product element 104 which has been brought in sufficient spatial vicinity of the detector 102. The processor 106 may be further configured for triggering a purchase order of a product element 104 via the communication system 142 in response to a derivation of the identity of the product element 104 which has been brought in sufficient spatial vicinity of the detector 102. For this purpose, each portable module 100 furthermore comprises a wireless communication unit 134 configured for wirelessly communicating by Wi-Fi, the detected data and/or information derived therefrom as a result of the processing to the router 144 as one of the communication partner devices 136. Via the public Internet (see communication network 210), the router 144 (as communication partner device 136) will then forward this data and/or information to the server computer 146 (as another communication partner device 136).

As can be taken from Figure 1, multiple portable modules 100 according an exemplary embodiment of the invention are installed in various power sockets 124 at different locations of house 200. The house 200 comprises different rooms 202, such as a kitchen, a bathroom, a garage, etc. Users of the house 200 use product elements 104 (compare for example Figure 2) in all these rooms 202. For instance referring to the kitchen, a user may take product elements 104 from a refrigerator 206 and may use them. A user may then determine that a stock of a specific type of product element 104, for instance milk bottles, becomes short or empty. The user may then simply move the empty milk bottle towards the detector 102 of the portable module 100 in the kitchen plugged into the power socket 124 via the mains supply 108. The detector 102 may then detect the event that the user has spatially approached the product element 104 to the detector 102 so that the detection of the product element 104 may be accomplished, for instance by Near Field Communication (NFC). Via this detection by the cooperation between a tag of the product element 104 and the detector 102, the portable module 100 may detect that the fact that the user wishes to make a purchase order concerning the product element 104 "milk bottles". Upon detection of the presence of this specific product element 104, a processor 106 may process this information and may for instance display the determined product element 104 "milk bottle" on a display of the portable module 100. The portable module 100 may then either directly initiate an order of milk bottles via the communication system 142 shown in Figure 1 or may invite the user via a display of the portable module 100 to provide details about a desired order (for instance confirm a proposed order, indicate a quantity of product elements 104 to be ordered, determine a supplier to deliver the product elements 104, etc.). After an order has been defined, corresponding purchase order information can be communicated via communication unit 134 of the mobile or portable module 100 to the server computer 146. The communication unit 134 may communicate wirelessly, for instance by Wi-Fi, with router 144 as communication partner device 136 in another room 202 of the house 200. To establish such a communication capability, it is only necessary prior to the first operation of the portable module 100 to establish a Wi-Fi connection with the router 144.

The communication partner device 136 configured as router 144 may then communicate, for example via communication network 210 such as the public Internet, with server computer 146 as further communication partner device 136. The server computer 146 may further process the transmitted data and may initiate the actual supply of the identified product elements 104 to the user, i.e. to the house 200. For this purpose, it is for instance possible that the server computer 146 communicates, for example again over the communication network 210, with a supplier node 212 supplying the or organizing supply of the determined kind of product element 104 (in the described embodiment "milk bottles").

However, as an alternative to the described data processing architecture, it is also possible that the portable module 100 only identifies the product element 104 detected by the detector 102 and supplies this information to the server computer 146. The server computer 146 may then search a database for an inventory of product elements 104 assigned to the user of the house 200 or of the respective portable module 100. The server computer 146 may then make a selection which delivery of the product elements 104 to the user shall be proposed to the user via a display of the portable module 100 from which the detection has been triggered. The server computer 146 may then send this data to the portable module 100, for instance using a unique identifier assigned to this portable module 100 or a user thereof. By this communication architecture, the processing tasks are mainly made at the side of the server computer 146. As a consequence, it is then sufficient that the server computer 146 is equipped with a relatively high degree of functionality in terms of hardware and software resources. In contrast to this, the multiple portable devices 100 may be equipped with low effort in terms of software and hardware resources.

In a similar way as described above with regard to the kitchen, portable modules 100 of corresponding type may also be installed in the other rooms 202 of the house 200. For example, a further portable module 100 may be installed in close vicinity of or even attached to or mounted on a storage container 214 such as a dustbin. When, for instance in a bath or at a diaper changing table, a user has used a cosmetic article (for instance a diaper or a razor blade) and throws the used diaper or razor blade into the storage container 214, this event can be detected by the portable module 100 spatially located at, on or in the storage container 214, since putting the used product element 104 into the storage container 214 brings this product element 104 in sufficient spatial vicinity of the assigned portable module 100, thereby triggering detection of the diaper or razor blade as example of product element 104. When a communication of data between this portable module 100 and the server computer 146 yields the result that a stock of diapers or razor blades in the house 200 falls below a predetermined threshold value, order of new product elements 104 (such as diapers or razor blades in the given example) can be initiated. Thereby, the process of managing an inventory of product elements 104 by a user in the house 200 can be further simplified.

Some or all communication messages exchanged within the communication system 142 can be encrypted to increase data safety.

**Figure 2** illustrates a schematic view of a portable module 100 according to an exemplary embodiment of the invention which can be used according to Figure 1.

In addition to the elements illustrated and described already referring to Figure 1, the portable module 100 shown in Figure 2 comprises a user equipment 110 which is equipped with a first electrically conductive contact 114 (such as one or more metal pads) coupled with the processor 106 and the detector 102 via battery 138. Correspondingly, the holder component 112 comprises a second electrically conductive contact 116 (such as one or more metal pads) coupled with the mains plug 108 and being electrically coupled with the first electrically conductive contact 114 upon attaching the user equipment 110 to the holder component 112. By taking this measure, an electric power transmission from a mains supply to the user equipment 110 may be accomplished by a galvanic contact.

Additionally or alternatively, the user equipment 110 may be provided with a first inductor 118 (such as a coil) coupled with the processor 106 and the detector 102 via battery 138 and the holder component 112 comprises a second inductor 120 (such as a coil) coupled with the mains plug 108 and being wirelessly coupled with the first inductor 118 upon attaching the user equipment 110 to the holder component 112. By taking this measure, an electric power supply from the mains supply to the user equipment 110 may be accomplished by a wireless inductive energy transfer mechanism.

Moreover, the user equipment 110 may be provided with a user interface 140 (in particular a touchscreen) which may be configured for displaying the detected data and information derived therefrom as a result of the processing on a display 122. The user interface 140 may also be capable of receiving a control command (such as a user input by touching the touchscreen, i.e. display 122) from a user related to a management of an inventory of product elements 104.

In the shown embodiment, multiple detectors 102 are provided, for instance an NFC detector, a barcode detector and a camera as an optical detector. All these resources may be provided as part of user equipment 110 forming one of two components of the portable module 100. The other component is the holder component 112 clampingly engaging the user equipment 110. For starting operation of the portable module 100, it is sufficient that the user plugs the mains plug 108 of the holder component 112 into a power socket 124 (not shown in Figure 2). By accommodating the user equipment 110 in an accommodation volume of the holder component 112, also an electric connection between the cooperating electrically conductive contacts 114, 116 is established. Thereby, electric power may be supplied from the mains supply via the mains plug 108 to the user equipment 110, more precisely to the processor 106 and the detector 102 thereof. As can be taken from Figure 2 as well, it is also possible to inductively couple electric power from the mains supply into the user equipment 110, compare cooperating inductors 118, 120. This energy may not only power the detector 102 and the processor 106, but may also charge rechargeable accumulator or battery 138 of the user equipment 110.

As can be further taken from Figure 2, a data storage unit 218 can be provided as well. Such a data storage unit 218 may be a mass storage device such as a hard disc, a flash memory, etc. Data may be stored on the data storage unit 218, for instance software for operating the portable module 100, product element information relating to a product element portfolio of the user of the portable module 100, etc.

Furthermore, the portable module 100 comprises a microphone 220, for instance for detecting acoustic user commands in terms of product management by voice recognition. A loudspeaker 222 of the portable module 100 may emit acoustic waves, for instance provide information to the user in the form of speech, etc. (for instance "milk bottle detected, please confirm purchase order of six milk bottles by saying 'yes' or reject purchase order by saying 'no'"). More specifically, the portable module 100 may comprise a voice recognition unit (compare microphone 220) configured for recognizing a user's voice. The processor 106 may be configured for processing a recognized voice signal in terms of managing a stock of a detected product element 104. In particular, it may be possible to manage or trigger an order of a detected product element 104 by voice recognition.

As can be taken from Figure 2 as well, the product element 104 may be equipped with corresponding tags 224, 226 for allowing the respective detector 102 to determine the identity of a detected product element 104. These tags 224, 226 may include an RFID tag 224, a barcode 226, etc. Only when the product element 104 is brought into a spatial range 228, 230 over which the respective detector 102 can detect the presence and determine the identity of the product element 104, such detection may be carried out. Spatial range 228 refers to a spatial range over which an RFID detection is enabled. Spatial range 230 refers to a spatial range over which an optical barcode detection is enabled. Proper detection of a product element 104 by a detector 102 may be confirmed to a user by a feedback signal (such as an optical feedback signal, an acoustic feedback signal or a haptic feedback signal). The required sufficient spatial vicinity between detector 102 and product element 104 for initiating a detection is a failure-robust mechanism against undesired detection of product elements 104 located accidentally in the environment of the portable module 100.

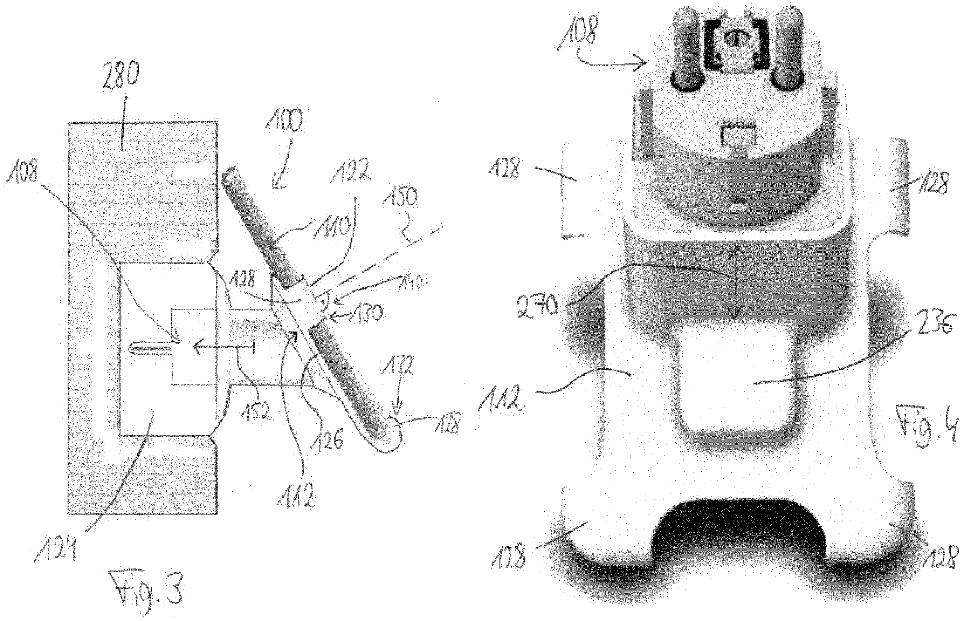

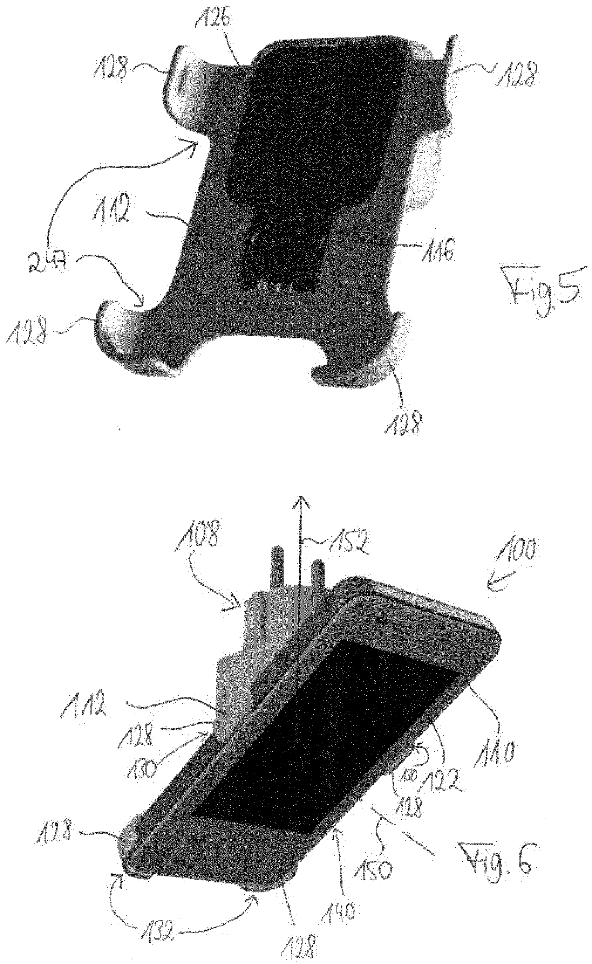

**Figure 3** illustrates a side view of a portable module 100 according to exemplary embodiment of the invention composed of a user equipment 110 and a holder component 112 plugged into a power socket 124 in a vertical wall 280 of a building. In the shown embodiment, the holder component 112 is entirely rigid so as to define a fixed position and orientation of the user equipment 110 when the user equipment 110 is held and accommodated in an accommodation volume 247 (see Figure 5) defined by the holder component 112 and when the mains plug 108 is plugged into power socket 124.

According to Figure 3, the holder component 112 and the user equipment 110 are configured so that a normal vector 150 of a planar display surface of display 122 of the user equipment 110 is slanted with regard to a plugging direction 152 along which the mains plug 108 is to be plugged into power socket 124. In other words, the touchscreen of the user equipment 110 (i.e. the user interface 140 with the display 122) is oriented slanted with regard to both a horizontal axis and a vertical axis so that it is convenient for a user to look onto the touchscreen from a viewing angle which allows to properly use the user interface 140 without disturbing effects such as reflections, a dark display, or the like. This is made possible without the need of the user to make any adjustment, since the holder component 112 is completely rigid and thereby defines this orientation. Alternatively, such an adjustability by a user may be enabled.

The holder component 112 comprises a support surface 126 (as best seen in Figure 5) for supporting a back main surface of the user equipment 110 and a number of circumferential engaging protrusions 128 (as best seen in Figure 4 and Figure 5) for clampingly engaging a number of side edge portions and a number of corner portions of the user equipment 110. The engaging protrusions 128 are configured for engaging two side edges 130 and two corner edges 132 of the user equipment 110.

In one embodiment, it is possible that the user equipment 110 is a smart phone on which a corresponding software (for instance an app) is installed so that the product element inventory system can be provided with low additional effort.

Figure 3 shows that the holder component 112 is made of one integral rigid body so that, after having plugged the mains plug 108 into the power socket 124, the orientation of the user equipment 110 is precisely defined. In the shown embodiment, this orientation is of a kind that, when the portable module 100 is installed in the power socket 124, the user may look onto the display 122 of the user equipment 110 in a convenient way without the need of adjusting the shape of the portable module 100. Installation of the portable module 100 may hence be accomplished by one simple movement of the hand of a user.

**Figure 4** illustrates a rear view of a holder component 112 of a portable module 100 according to an exemplary embodiment.

Figure 4 shows details of the back side of the holder component 112 of portable module 100. A reinforcing structure 236 is shown for rendering the holder component 112 even more rigid for properly holding and supporting the user equipment 110. Furthermore, a spacer 270 is provided between a user equipment accommodating section of the holder component 112 and the mains plug 108. This simplifies operation of the portable module 100.

**Figure 5** illustrates a front view of the holder component 112 according to Figure 3.

As can be taken from Figure 5, both the electric connections for power supply of the user equipment 110 as well as a stable support plate 126 are provided at a contact area between the holder component 112 and the user equipment 110. A friction increasing element, for instance a rubber sheet, may be attached to the support surface 126 for further increasing friction between user equipment 110 and holder component 112. This further promotes secure connection between holder component 112 and user equipment 110 and suppresses undesired sliding between these components.

**Figure 6** illustrates a three-dimensional view of a portable module 100 according to an exemplar embodiment of the invention.

In Figure 6, also the display 122 (with touch screen) of the user equipment 110 is shown. The touchscreen enables bidirectional communication between the portable module 100 and a user.

When a user has brought a product element 104 in spatial vicinity to detector 102, for example by sliding the product element 104 over an exterior surface of the user equipment 110, it is possible that the product element 104 is displayed (in alphanumerical code and/or as an image) on a display 122 of the user equipment 110. The information on display 122 can be accompanied with the information that and when and what type of delivery of new product elements 104 of the identified type can be expected. The portable module 100 may transmit the information which product elements 104 have been detected (and therefore previously used or consumed by a user) to the server computer 146. The server computer 146 may then determine a proposal or plan for delivering the product elements 104 to the user. When product elements 104 are no longer available from a supplier, this information may be displayed as well on the display 122 of the portable module 100. It is also possible that a proposal is made to the user for delivering a similar product element 104 instead. In a certain time before actual delivery, for instance 24 hours before the delivery, the information about the delivery can be displayed to the user of the portable module 100 as well. When displaying the information of an order for product elements 104, the user may also be enabled to increase or decrease an amount of product elements 104 to be delivered.

The server computer 146 constituting a communication partner device 136 of the communication system 142 may also calculate on his own an estimated remaining amount of product elements 104 at a user side. For instance, when daily changed contact lenses are used, it can be assumed that two contact lenses per day are consumed by a user. When for instance 100 new contact lenses have been delivered to the user, each day after that delivery may be assumed to relate to a reduction of two pieces of the number of remaining contact lenses at a user site. When, according to such a calculation of the server computer 146, a remaining amount of product elements 104 falls below a predetermined threshold value (for instance 20 contact lenses), the server computer 146 may offer to the user via the display 122 of a portable module 100 that new contact lenses should be delivered. A user may then confirm or reject this proposal, and may correct any discrepancy between the assumed number of remaining contact lenses as calculated and the actual amount of remaining contact lenses. Such a system renders an inventorization of product elements 104 simple to a user, because the communication system 142 supports the user in an autonomous way with tasks related to inventory management.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants are possible which use the solutions shown and the principle according to the invention even in the case of fundamentally different embodiments.

## Claims

1. A portable module (100), comprising:
a detector (102) configured for detecting data indicative of an event that a product element (104) is brought in sufficient spatial vicinity of the detector (102);
a processor (106) configured for processing the detected data; and
a mains plug (108) configured to be pluggable into a power socket (124) for supplying the portable module (100), in particular the processor (106) and the detector (102), with electric energy.

2. The portable module (100) according to claim 1, wherein the detector (102) comprises at least one of the group consisting of a Near Field Communication detector, a Radio Frequency Identification Tag reader, a barcode scanner, a Quick Response code scanner, and an alphanumerical code scanner.

3. The portable module (100) according to claim 1 or 2, composed of a user equipment (110) and a holder component (112).

4. The portable module (100) according to claim 3, comprising at least one of the following features:
wherein the user equipment (110) includes the detector (102) and the processor (106);
wherein the holder component (112) is configured for detachably holding the user equipment (110);
wherein the holder component (112) is entirely rigid so as to define a fixed position and orientation of the user equipment (110) when the user equipment (110) is held and accommodated in an accommodation volume (247) defined by the holder component (112) and when the mains plug (108) is plugged into a power socket (124);
wherein the holder component (112) includes the mains plug (108);
wherein the user equipment (110) comprises a first electrically conductive contact (114) and the holder component (112) comprises a second electrically conductive contact (116) coupled with the mains plug (124) and being electrically coupled with the first electrically conductive contact (114) upon attaching the user equipment (110) to the holder component (112) for supplying electric energy from the power socket (124) via the mains plug (108) to the user equipment (110);
wherein the user equipment (110) comprises a first inductor (118) and the holder component (112) comprises a second inductor (120) coupled with the mains plug (108) and being wirelessly coupled with the first inductor (118) upon attaching the user equipment (110) to the holder component (112) for supplying electric energy from the power socket (124) via the mains plug (108) to the user equipment (110);
wherein the holder component (112) and the user equipment (110) are configured so that a normal vector (150) of a surface of a display (122) of the user equipment (110) is slanted with regard to a plugging direction (152) along which the mains plug (108) is to be plugged into a power socket (124);
wherein the holder component (112) comprises a support surface (126) for supporting a main surface of the user equipment (110) and at least one engaging protrusion (128) for engaging, in particular clamping, at least one edge portion of the user equipment (110), wherein in particular the at least one engaging protrusion (128) is configured for engaging at least one of the group consisting of at least one side edge (130) and at least one corner edge (132) of the user equipment (110);
wherein the user equipment (110) is configured as a mobile phone, in particular as a smart phone.

5. The portable module (100) according to any of claims 1 to 4, wherein the processor (106) is configured for processing the detected data for deriving identification information indicative of an identity of the product element (104) which has been brought in sufficient spatial vicinity of the detector (102).

6. The portable module (100) according to claim 5, wherein the processor (106) is configured for triggering an order of a product element (104) in response to a derivation of the identity of the product element (104) which has been brought in sufficient spatial vicinity of the detector (102).

7. The portable module (100) according to any of claims 1 to 6, comprising a communication unit (134), in particular a wireless communication unit (134), configured for communicating, in particular for wirelessly communicating, at least one of the detected data and information derived therefrom as a result of the processing to at least one communication partner device (136).

8. The portable module (100) according to any of claims 1 to 7, comprising at least one battery (138), in particular rechargeable via the mains plug (108), for supplying the portable module (100) with electric energy.

9. The portable module (100) according to any of claims 1 to 8, comprising a user interface (140), in particular a touchscreen, configured for at least one of the group consisting of displaying at least one of the detected data and information derived therefrom as a result of the processing, and receiving a control command from a user related to a management of an inventory of product elements (104).

10. The portable module (100) according to any of claims 1 to 9,
comprising a voice recognition unit (220) configured for recognizing a user's voice;
wherein the processor (106) is configured for processing a recognized voice signal in terms of managing a stock of a detected product element (104), in particular of managing an order of a detected product element (104).

11. A communication system (142), comprising:
a portable module (100) according to any of claims 1 to 10;
at least one communication partner device (136) communicatively coupled with the portable module (100) for communicating at least one of the detected data and information derived therefrom.

12. The communication system (142) according to claim 11, comprising at least one of the following features:
wherein the at least one communication partner device (136) is configured for managing an inventory of product elements (104) assigned to a user of the portable module (100) based on the communicated data and/or information;
wherein the at least one communication partner device (136) is configured for triggering an order of a product element (104) in response to a derivation of an identity of the product element (104) which has been brought in sufficient spatial vicinity of the detector (102);
wherein the at least one communication partner device (136) is configured for communicating inventory data related to a management of an inventory of detected product elements (104) to the portable module (100) to be displayed to a user;
wherein the at least one communication partner device (136) comprises at least one of the group consisting of a router (144), and a server computer (146),
comprising at least one further portable module (100) according to any of claims 1 to 10 to which the at least one communication partner device (136) is communicatively coupled;
comprising a power socket (124) in which the mains plug (108) of the portable module (100) is plugged or is to be plugged.

13. A method of managing product elements (104), the method comprising:
detecting data indicative of an event that a product element (104) is brought in sufficient spatial vicinity of a detector (102) of a portable module (100);
processing the detected data by a processor (106) of the portable module (100); and
plugging a mains plug (108) of the portable module (100) into a power socket (124) for supplying the portable module (100), in particular the processor (106) and the detector (102), with electric energy.

14. A computer-readable medium, in which a computer program of managing product elements (104) is stored, which computer program, when being executed by one or a plurality of processors (106, 144, 146), is adapted to carry out or control a method according to claim 13.

15. A program element of managing product elements (104), which program element, when being executed by one or a plurality of processors (106, 144, 146), is adapted to carry out or control a method according to claim 13.
